# EUROPÄISCHE PATENTSCHRIFT

(11) **EP 1 742 825 B1**
(45) Veröffentlichungstag und Bekanntmachung des Hinweises auf die Patenterteilung: **29.08.2007**
(21) Anmeldenummer: 05729480.3
(22) Anmeldetag: 31.03.2005
(51) Int. Cl.: B62D 15/02, G08G 1/14

(54) **VERFAHREN ZUM ANZEIGEN VON FAHRERINFORMATIONEN ZUM EINPARKEN**
METHOD FOR THE DISPLAY OF DRIVER INFORMATION FOR PARKING
PROCEDE POUR AFFICHER DES INFORMATIONS DE STATIONNEMENT DESTINEES A UN CONDUCTEUR

(30) Priorität: 27.04.2004 DE 102004020424
(43) Veröffentlichungstag der Anmeldung: 17.01.2007
(73) Patentinhaber: ROBERT BOSCH GMBH, 70442 Stuttgart (DE)
(72) Erfinder: SCHMID, Roland, 70599 Stuttgart (DE); EGELHAAF, Jan, 71229 Leonberg (DE)
(86) Internationale Anmeldenummer: PCT/EP2005/051456
(87) Internationale Veröffentlichungsnummer: WO 2005/105551

(56) Entgegenhaltungen:
- EP-A- 1 253 065
- EP-A- 1 288 071
- DE-A1- 10 220 427

## Beschreibung

Die Erfindung betrifft ein Verfahren zum Anzeigen von Fahrerinformationen.

Fahrerassistenzsysteme unterstützen den Fahrer beim Ein- und Ausparken aus einer Parklücke durch im Allgemeinen auf Ultraschallbasis beruhenden Sensoren zur Ermittlung der Parklücke und einer hierauf basierenden Einparkhilfe. Die DE 198 09 416 A1 zeigt ein Verfahren zum unterstützten Einparken eines Kraftfahrzeuges, bei dem eine Parklücke mittels am Kraftfahrzeug angeordneter Sensoren vermessen wird, und - falls die Parklücke hinreichend groß ist - eine Einparkstrategie in Abhängigkeit der Größe und Position der potentiellen Parklücke berechnet und dem Fahrer mitgeteilt wird. Hierbei kann eine berechnete Einparkstrategie dem Fahrer auch optisch vermittelt werden.

Ein solches System ist auch aus der DE 102 20 427 bekannt.

Ein derartiges System kann grundsätzlich den Einparkvorgang für den Fahrer erleichtern. Die hierbei vermittelten Anweisungen sind jedoch oftmals für den Fahrer schwer umzusetzen und der jeweiligen Fahrsituation bzw. Einparksituation intuitiv nur schwer anpassbar. Dies führt dazu, dass der Fahrer derartige Systeme nach einigen Versuchen oftmals gar nicht mehr benutzt, sondern die Parklücke weiterhin visuell abschätzt und intuitiv einparkt.

Das erfindungsgemäße Verfahren weist demgegenüber insbesondere den Vorteil auf, dass ein für den Fahrer intuitiv verständliches Anzeige- und Bedienkonzept geschaffen wird, das den Fahrer während des Einparkvorganges fortlaufend unterstützt.

Hierbei wird eine verständliche und transparente Darstellung erreicht, die aufgrund erhöhter Akzeptanz zu einer häufigeren Benutzung des Systems führt. Der Fahrer kann sich bei der erfindungsgemäßen Darstellung den jeweiligen Lenkumkehrpunkten zwischen den Trajektorienbereichen und dem jeweils gewünschten idealen Lenkwinkel langsam und ohne Hektik annähern, wobei die Abstände zu diesen Idealwerten dem Fahrer direkt visualisiert werden können.

Für das erfindungsgemäße Verfahren sind grundsätzlich keine wesentlichen zusätzlichen Anzeigeeinrichtungen im Fahrzeug erforderlich; es kann insbesondere eine bereits vorhandene Anzeigeeinrichtung eines Navigationsgerätes, eines zentralen Displays oder eines Displays im Dashboard bzw. Kombiinstrument verwendet werden. Weiterhin kann jedoch auch eine mehrteilige Anzeigeeinrichtung vorgesehen sein, z.B. mit einem zusätzlichen Anzeigebereich in der rechten C-Säule des Fahrzeuges, um dem Fahrer beim Zurückschauen während des Einparkvorganges direkt Fahrerinformationen anzeigen zu können.

Der Erfindung liegt der Gedanke zugrunde, den Einparkvorgang zunächst durch eine Trajektorie zu ermitteln. Diese Trajektorie kann gegebenenfalls nach einem Vorbeifahren des Fahrzeuges an der Parklücke aus den hierbei ermittelten Messsignalen berechnet werden. Eine derartige Trajektorie weist z.B. eine S-Form mit zwei bis vier Lenkumkehrpunkten, d.h. Änderungen des Lenkeinschlages, auf. Die ermittelte Trajektorie wird dem Fahrer als Trajektorienbild mit mehreren Trajektorienbereichen und dazwischen liegenden Lenkumkehrpunkten visuell angezeigt, wobei bei Erreichen eines Lenkumkehrpunktes dem Fahrer die nunmehr erforderliche Änderung des Lenkeinschlages angezeigt werden kann. Dem Fahrer wird hierbei die aktuelle Position durch eine Unterteilung des jeweiligen Trajektorienbereichs in einen bereits zurückgelegten Bereichsabschnitt und einen noch zurückzulegenden Bereichsabschnitt intuitiv verständlich angezeigt. Er kann sich dem jeweiligen Lenkumkehrpunkt angemessen, d.h. nicht unnötig zu zögerlich oder aber zu schnell, nähern, wobei er den Fortschritt seiner Fahrstrecke und direkt auf der Anzeigeeinrichtung erkennt. Auch die Einstellung des jeweiligen Lenkeinschlages kann in intuitiv verständlicher Weise erfolgen, indem z.B. entsprechende Symbole farblich und/oder durch Blinken hervorgehoben werden. Hierbei kann die Annährung des eingestellten Lenkeinschlages an den erforderlichen Lenkeinschlag bzw. Soll-Lenkeinschlag dem Fahrer auch quantitativ angezeigt werden, z.B. durch Erhöhung oder Verringerung der Blinkfrequenz, bis er den Soll-Lenkeinschlag innerhalb zumindest eines vorgegebenen Intervalls erreicht hat.

Bereits zurückgelegte Trajektorienbereiche und der bereits zurückgelegte Bereichsabschnitt des aktuellen Trajektorienbereiches werden dem Fahrer anders dargestellt als der noch zurückzulegende Bereichsabschnitt des aktuellen Trajektorienbereiches und die nachfolgenden, noch zurückzulegenden Trajektorienbereiche. Dies kann entsprechend durch andersartige farbige Darstellung, grundsätzlich aber auch z.B. durch andere Helligkeits- bzw. Grautöne und/oder andere Transparenzwerte der Anzeigeeinrichtung erfolgen. Weiterhin können z.B. auch die Umrisslinien anders dargestellt werden, wenn bei der jeweiligen Anzeigeeinrichtung entsprechende andere Darstellung des Flächenbereiches problematisch ist.

Gemäß einer bevorzugten Ausführungsform kann bei Abweichen der tatsächlichen Fahrlinie von der Trajektorie, insbesondere bei Unter- bzw. bei Übersteuern des Lenkrades gegenüber den Soll-Lenkeinschlägen, eine Korrekturhilfe gegeben werden, bei der die von ihm tatsächlich zurückgelegte Fahrstrecke als Abweichungsbild zusammen mit dem vorgegebenen Trajektorienbild dargestellt wird, z.B. dem Trajektorienbild unterlegt. Zusätzlich können die für die Lenkumkehrpunkte vorgesehenen Symbole dauerhaft z.B. blinkend oder in roter Farbe dargestellt werden, um den erforderlichen zusätzlichen Lenkeinschlag darzustellen, mit dem der Fahrer wiederum die Trajektorie erreichen kann.

Grundsätzlich kann erfindungsgemäß die anfangs ermittelte Trajektorie T auch fortlaufend angepasst werden. In diesem Fall wird entsprechend das Trajektorienbild fortlaufend verändert, zusätzlich zu der dynamischen Änderung innerhalb des Trajektorienbildes.

Die Erfindung wird im Folgenden anhand der beiliegenden Zeichnungen an einigen Ausführungsformen näher erläutert. Es zeigen:
Fig. 1a ein Fahrzeug mit Sensoren und Steuereinrichtung zur Durchführung des erfindungsgemäßen Verfahrens;
Fig. 1b eine Straßenszene mit einer Einparksituation des Fahrzeuges;
Fig. 2 a bis h die Darstellung eines ordnungsgemäßen Einparkvorganges auf einer Anzeigeeinrichtung mittels dem erfindungsgemäßen Verfahren zur Anzeige von Fahrerinformationen;
Fig. 3 die Darstellung eines untersteuerten Einparkvorganges mittels dem erfindungsgemäßen Verfahrens;
Fig. 4 die Darstellung eines übersteuerten Einparkvorganges mittels dem erfindungsgemäßen Verfahren;
Fig. 5 die Darstellung eines weiteren untersteuerten Einparkvorganges gemäß dem erfindungsgemäßen Verfahren;
Fig. 6 eine sich optional an Fig. 2h anschließende Darstellung einer nachfolgend in Vorwärtsrichtung zu fahrenden Wegstrecke gemäß dem erfindungsgemäßen Verfahren.

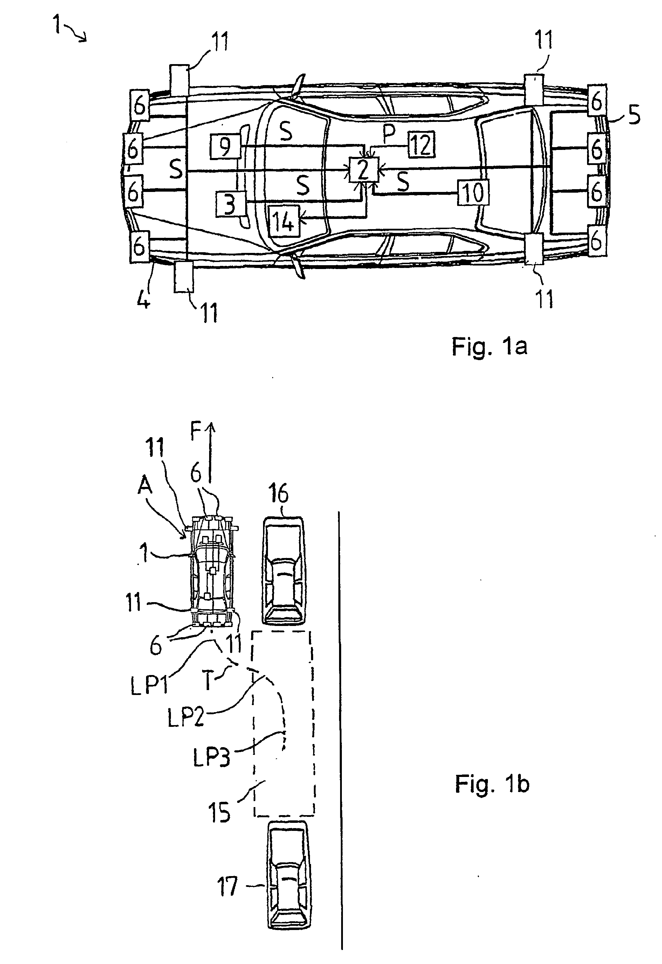

Ein Fahrzeug 1 weist eine Steuereinrichtung 2, die zur Durchführung des erfindungsgemäßen Verfahrens zur Anzeige von Fahrerinformationen und vorteilhafterweise auch zusätzlich für die Fahrdynamikregelung vorgesehen sein kann, einen Wegsignalgeber 3, mehrere, an dem Bug und dem Heck des Fahrzeuges 1, z. B. an einem vorderen Stoßfänger 4 und einem hinteren Stoßfänger 5, angebrachte Abstandssensoren 6, einen Lenkwinkelsensor 9, eine Benutzerschnittstelle (Mensch-Maschine-Schnittstelle, HMI) 10 und mindestens zwei Sensoren 11 zur Parklückenvermessung auf. Hierbei kann z.B. lediglich jeweils ein Sensor 11 zur Parklückenvermessung an der linken und der rechten Seite des Fahrzeuges 1 vorgesehen sein; vorteilhafterweise sind jedoch wie in Fig. 1a gezeigt an jeder Seite des Fahrzeuges 1 zwei Sensoren 11 zur Parklückenvermessung vorgesehen, wobei die beiden vorderen Sensoren 11 z.B. in dem vorderen Stoßfänger 4 vorgesehen sein können; abweichend von Fig. 1a können auch ergänzend die hinteren Sensoren 11 in dem hinteren Stoßfänger 5 vorgesehen sein. Vorteilhafterweise ist weiterhin ein Gierratensensor 12 vorgesehen. Die Sensoren 3, 6, 9, 11 und 12 geben hierbei Messsignale S an die Steuereinrichtung 2; entsprechend gibt der Benutzer über die Benutzerschnittstelle 10 Eingabesignale P an die Steuereinrichtung 2. Die Sensoren 3, 6, 9, 11 und 12 sowie die Benutzerschnittstelle 10 sind mit der Steuereinrichtung vorteilhafterweise über einen fahrzeuginternen Bus, z. B. den fahrzeuginternen CAN-Bus, verbunden. Weiterhin ist eine Anzeigeeinrichtung 14 zur Anzeige von Fahrerinformationen vorgesehen; die Anzeigeeinrichtung 14 kann z. B. im Dashboard des Fahrzeuges vorgesehen sein; weiterhin kann sie auch z. B. als Teil der Windschutzscheibe des Fahrzeuges ausgebildet sein, indem die Fahrinformationen auf die Windschutzscheibe projiziert werden. Weiterhin kann die Anzeigeeinrichtung 14 auch mehrteilig ausgebildet sein und ein Teil der Anzeigeeinrichtung in der C-Säule des Fahrzeuges vorgesehen sein, so dass der nach hinten blickende Fahrer hier Informationen erhalten kann.

Für einen Einparkvorgang startet der Benutzer das erfindungsgemäße Verfahren zur Anzeige von Fahrerinformationen z.B. durch ein Eingabesignal P über die Benutzerschnittstelle 10. Daraufhin fährt er mit dem Fahrzeug 1 gemäß Fig. 1 b an einer Parklücke 15 zwischen z. B. parkenden Fahrzeugen 16 und 17 in Fahrtrichtung F vorbei, bis er die in Fig. 1b gezeigte Ausgangsposition A für den Parkvorgang in die Parklücke 15 eingenommen hat. Die Sensoren 11 zur Parklückenvermessung vermessen die Parklücke 15. Hieraus wird mit an sich bekannten Verfahren eine Trajektorie T von der Ausgangsposition A in die Parklücke 15 ermittelt. Die Trajektorie T wird vorteilhafterweise derartig ermittelt, dass sie aus mehreren aufeinander folgenden Teilstrecken mit jeweils konstantem Lenkwinkeleinschlag an Lenkumkehrpunkten LP1, LP2, LP3 besteht. Die Trajektorie T kann z. B. auch einen Fahrtrichtungswechsel, z. B. ein Vorsetzen des Fahrzeuges nach einer Rückwärtsfahrt, umfassen.

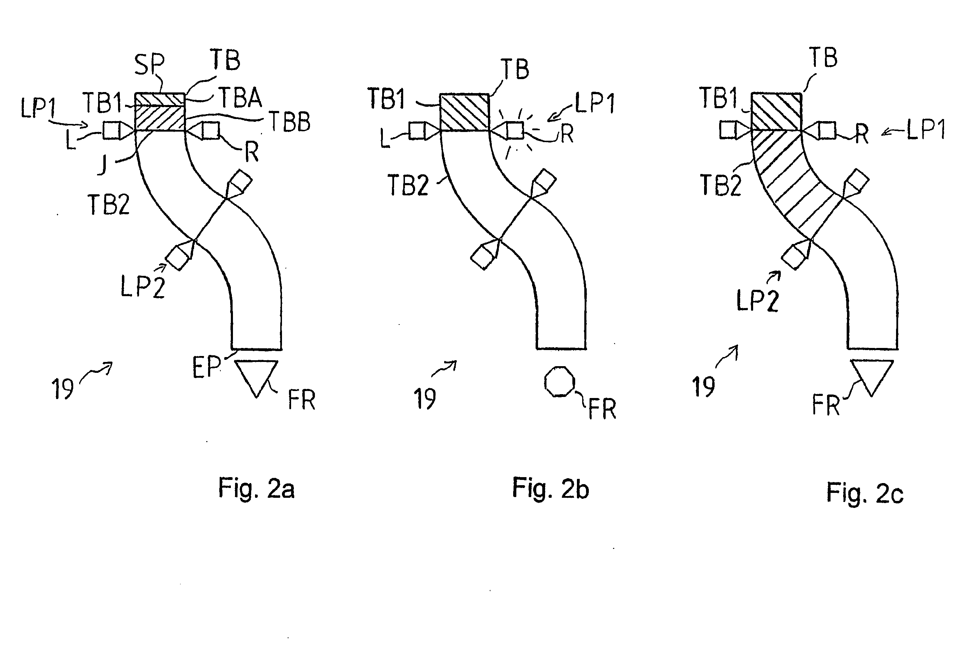

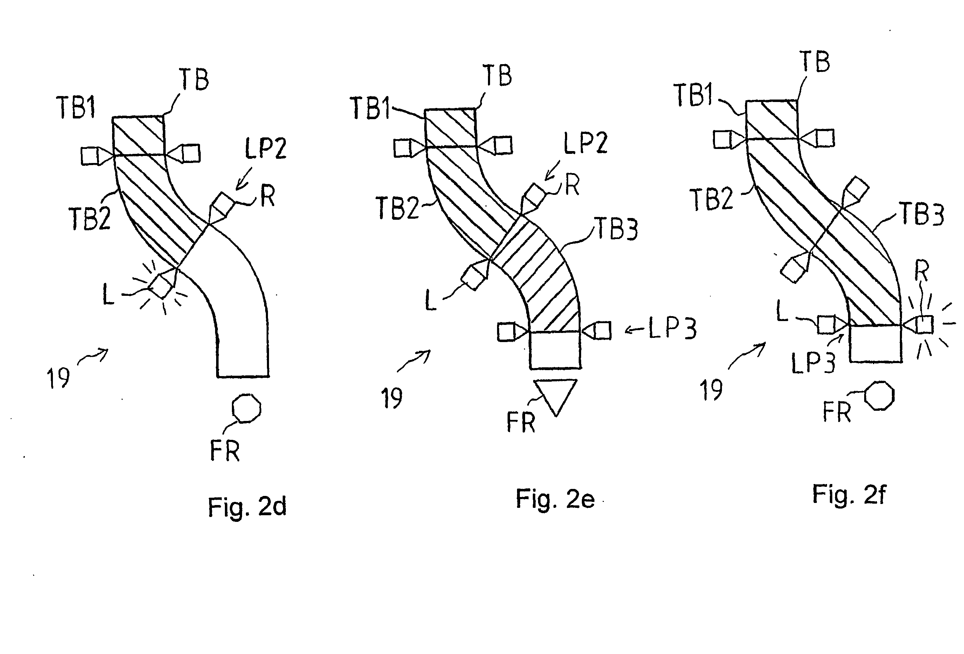

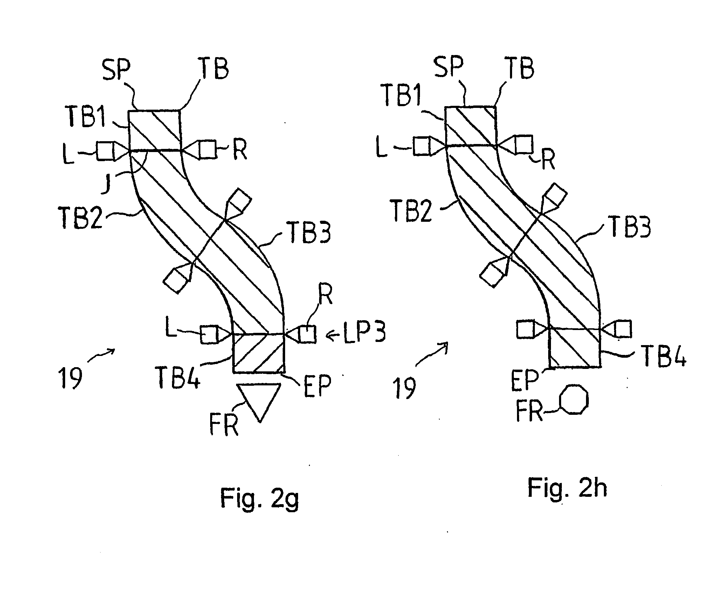

Nachfolgend wird dem Fahrer auf der Anzeigeeinrichtung 14 ein Bild 19 gezeigt, dass sich gemäß den Figuren 2 a bis 2 h während des Einparkvorganges dynamisch ändert. Das Bild 19 weist ein Trajektorienbild TB auf, das die Trajektorie T zumindest schematisch wiedergibt und als zweidimensionale Fläche, insbesondere als zweidimensionales Band mit dem Verlauf der Trajektorie T, dargestellt ist. Das Trajektorienbild TB setzt sich aus mehreren Trajektorienbereichen TBi, nämlich TB1, TB2, TB3 und TB4, zusammen, die jeweils Abschnitte der Trajektorie mit konstantem Lenkeinschlag wiedergeben. Die Trajektorienbereiche TBi stellen somit gradlinige Strecken oder Kreisbogenabschnitte dar, die vorteilhafterweise glatt ineinander übergehen. Grundsätzlich ist es abweichend hiervon jedoch auch möglich, dass die einzelnen Trajektorienbereiche TBi eine ungleichmäßige Krümmung aufweisen und der Fahrer somit innerhalb einzelner Trajektorienbereiche TBi den Lenkwinkel - ohne Änderung der Richtung des Lenkeinschlags - etwas nachführen muss. Zwischen den Trajektorienbereichen TBi sind an den Lenkumkehrpunkten LPi, d.h. LP 1, LP2 und LP3, Lenkeinschlagsymbole L, R neben dem Trajektorienbild TB angezeigt, die z. B. pfeilförmig auf die jeweilige Stelle des Trajektorienbildes, d. h. die Grenze zwischen den Trajektorienbereichen TBi, hinweisen. Ergänzend ist vorteilhafterweise eine Linie J zwischen zwei angrenzenden Trajektorienbereichen TBi gezogen. Weiterhin können in dem Bild 19 weitere Symbole, z. B. ein Symbol FR zur Darstellung der einzuhaltenden Fahrtrichtung wiedergegeben sein, das z. B. ein Pfeil- bzw. Stop-Schild wiedergeben kann.

Erfindungsgemäß erfolgt eine dynamische Anpassung des Trajektorienbildes TB mit seinen Trajektorienbereichen TBi sowie der Lenkeinschlagsymbole L, R und des Fahrtrichtungssymbols FR während der Fahrt des Fahrzeuges 1 auf der Trajektorie T der Figur 1 b. Hierbei werden bereits zurückgelegte Trajektorienbereiche TBi anders als noch zurückzulegende Trajektorienbereiche TBi dargestellt und weiterhin ein jeweiliger bereits zurückgelegter Bereichsabschnitt TBA des aktuell gefahrenen Trajektorienbereiches TBi anders dargestellt als der noch zurückzulegende Teil TBB des aktuell gefahrenen Trajektorienbereiches TBi.

Das Trajektorienbild TB weist einen in den Figuren oben angeordneten Startpunkt SP auf, der der Position A in Figur 1 b entspricht, und einen am unteren Rande des Trajektorienbildes TB gezeigten Endpunkt EP auf, der der Endposition in der Parklücke 15 entspricht. Bei einer komplexeren Trajektorie, bei der der Fahrer nach der Rückwärtsfahrt eine Vorwärtsfahrt durchführt, kann zunächst anstelle des Endposition in der Parklücke auch lediglich der Endpunkt des ersten, vollständig im Rückwärtsgang zurückgelegten Teils der Trajektorie erfolgen.

Gemäß Figur 2 a startet der Fahrer beim Startpunkt SP und beginnt mit dem ersten Trajektorienbereich TB1 mit einer Geradeausfahrt ohne Lenkeinschlag. Dementsprechend wird dem Fahrer zunächst lediglich der erste Trajektorienbereich TB1 farblich wiedergegeben, und die nachfolgende Trajektorienbereiche TB2, TB3 und TB4 zunächst ohne besondere farbliche Darstellung oder in anderer, einheitlicher farblicher Darstellung, die sich von der Darstellung des ersten Trajektorienbereiches TB1 unterscheidet, dargestellt.

Die Steuereinrichtung 2 detektiert die Rückwärtsfahrt durch den Wegsignalgeber 3, wobei sie ergänzend auch die jeweilige Position des Fahrzeuges 1 in der Trajektorie T bzw. bezüglich der Parklücke 15 durch die Sensoren 11 zur Parklückenvermessung überprüfen kann. Hierbei kann die Steuereinrichtung 2 auch die Messsignale S der Abstandssensoren 6 heranziehen, insbesondere innerhalb der Parklücke 15 vor Erreichen der Endposition zur Erkennung des Abstandes zu den weiteren parkenden Fahrzeugen 16, 17.

Innerhalb des aktuellen ersten Trajektorienbereiches TB1 wird dem Fahrer während der Rückwärtsfahrt ohne Lenkeinschlag der bereits zurückgelegte Weg als Bereichsabschnitt TBA in grüner Farbe und der noch zurückzulegende Bereichsabschnitt TBB in gelber Farbe dargestellt. In den Zeichnungen sind die verschiedenen Farben durch unterschiedliche Schraffuren widergegeben. Der aktuelle Trajektorienbereich TBi setzt sich somit mit dynamischer Änderung aus dem sich vergrößernden bereits zurückgelegten Bereichsabschnitt TBA und dem sich verkleinernden noch zurückzulegenden Bereichsabschnitt TBB zusammen. Das Fahrtrichtungssymbol FR zeigt die Rückwärtsfahrt durch einen entsprechenden, nach unten weisenden Pfeil an, die Lenkeinschlagsymbole L, R sind zunächst nicht besonders hervorgehoben.

In Figur 2 b hat das Fahrzeug 1 den ersten Lenkumkehrpunkt der Trajektorie T erreicht, bei dem sich der Lenkeinschlag ändert. Durch entsprechende Änderung der farblichen Wiedergabe der Lenkeinschlagsymbole des ersten Lenkumkehrpunktes LP1 wird dem Fahrer der Lenkeinschlag angezeigt. Hierbei wird in dem gezeigten Beispiel der erforderliche Rechtseinschlag durch Blinken und/oder rote Wiedergabe des rechten pfeilförmigen Lenkeinschlagsymbols R des ersten Lenkumkehrpunktes LP1 angezeigt. Weiterhin wird als Fahrtrichtungssymbol FR ein Stop-Schild angezeigt, da der Fahrer zunächst nicht weiter fahren soll. Der Fahrer dreht nun das Lenkrad und ändert hierdurch den Lenkwinkel bzw. Lenkeinschlag, was durch den Lenkwinkelsensor 9 des Fahrzeuges 1 detektiert wird, der dies durch die entsprechenden Messsignale S an die Steuereinrichtung 2 übermittelt.

Sobald der von dem Fahrer eingestellte Lenkeinschlag der Sollvorgabe der berechneten Trajektorie T entspricht, wird gemäß Fig. 2c das Blinken des rechten Lenkeinschlagsymbols R des ersten Lenkumkehrpunktes LP1 beendet. Vorteilhafterweise bleibt das rechte Lenkeinschlagsymbol R jedoch markiert, z. B. weiterhin rot beleuchtet, um dem Fahrer den weiterhin einzuhaltenden Rechtseinschlag anzuzeigen. Weiterhin wird der zweite Trajektorienbereich TB2 dem Fahrer als zurückzulegende Strecke angezeigt, wobei er zunächst vollständig als zurückzulegender Bereichsabschnitt TBB, d. h. wiederum in gelber Farbe, dargestellt wird. Weiterhin wird das Fahrtrichtungssymbol FR wiederum als nach unten weisender Pfeil angezeigt.

In Figur 2d hat der Fahrer wiederum den zweiten Trajektorienbereich TB2 vollständig zurückgelegt, so dass er vollständig in grüner Farbe, d. h. in gleicher farblicher Darstellung wie der bereits zurückgelegte erste Trajektorienbereich TB1 dargestellt wird. Da der Fahrer bei dem zweiten Lenkumkehrpunkt LP2 den Lenkeinschlag in Richtung zu einem Linkseinschlag ändern muss, wird das linke Lenkeinschlagsymbol L des zweiten Lenkumkehrpunktes LP2 wiederum - entsprechend der Figur 2 b - durch farbliche Darstellung, d.h. wiederum in roter Farbe, und durch Blinken angezeigt. Weiterhin wird als Fahrtrichtungssymbol FR wiederum ein Stop-Schild angezeigt. Der Fahrer kann nunmehr den Lenkeinschlag ändern und das Lenkrad nach links schlagen, bis der erforderliche Lenkeinschlag eingestellt wird.

Bei Erkennen des entsprechenden Lenkwinkels bzw. Lenkeinschlages durch das entsprechende Ausgangssignal S des Lenkwinkelsensors 9 beendet die Steuereinrichtung 2 gemäß Figur 2e wiederum das Blinken des linken Lenkeinschlagsymbols L und stellt den nachfolgenden dritten Trajektorienbereich TB3 in gelber Farbe als zurückzulegende Wegstrecke, d.h. zurückzulegenden Bereichsabschnitt dar.

Bei dem in Fig. 2f gezeigten nachfolgendem Erreichen des dritten Lenkumkehrpunktes LP3, bei dem der Fahrer den linken Lenkeinschlag in eine geradlinige Fahrt ohne Lenkeinschlag ändern muss, wird wiederum zunächst das rechte Lenkeinschlagsymbol R des dritten Lenkumkehrpunktes LP3 in roter Farbe und blinkend dargestellt. Nachdem der Fahrer in Fig. 2g den neutralen Lenkeinschlag eingestellt hat, werden beide Lenkeinschlagsymbole L und R des dritten Lenkumkehrpunktes LP3 einheitlich dargestellt, da der Fahrer die neutrale Lenkeinstellung halten muss, und weiterhin wiederum der vierte Trajektorienbereich TB4 als zurückzulegender Bereichsabschnitt TBB in gelber Farbe dargestellt, die sukzessive bei Fortschreiten als zurückgelegter Bereichsabschnitt TBA grün dargestellt wird, bis gemäß Figur 2 h der Endpunkt EP erreicht ist, was durch die Darstellung des Fahrtrichtungssymbols FR als Stop-Schild und Darstellung des gesamten Trajektorienbildes TB in grüner Farbe dargestellt wird.

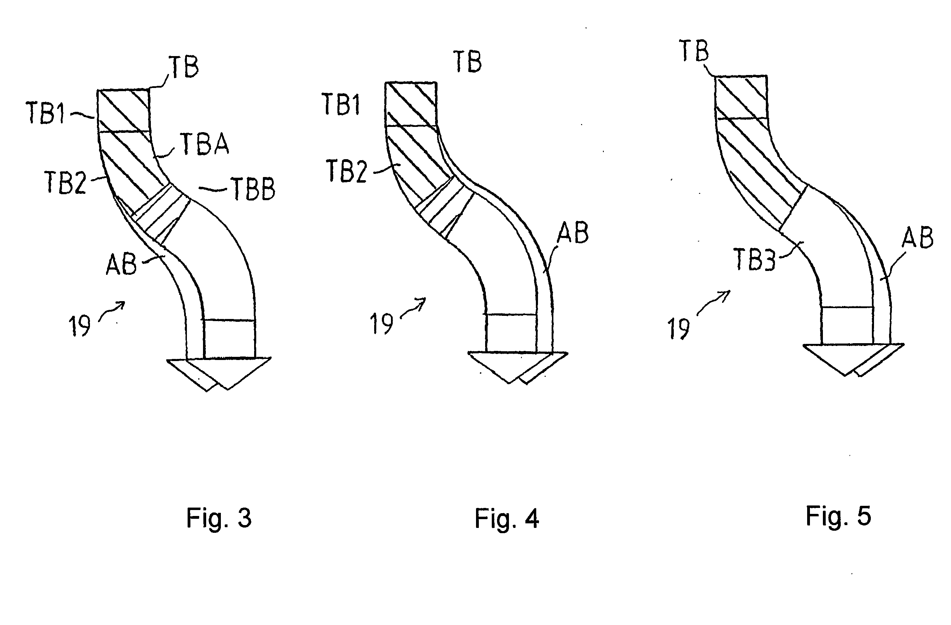

Fig. 3 zeigt das Bild 19 bei einem nicht ordnungsgemäßen Einparkvorgang, bei dem der Fahrer bereits im zweiten Trajektorienbereich TB2 nicht den erforderlichen Lenkeinschlag einstellt, sondern mit zu geringem Rechtseinschlag untersteuert. In Fig. 3 ist hierbei lediglich beispielhaft eine reine Pfeildarstellung des zweidimensionalen Bandes gezeigt. Die vom Fahrzeug 1 tatsächlich gefahrene Fahrlinie wird neben dem Trajektorienbild TB als Abweichungsbereich AB dargestellt. Der Abweichungsbereich AB wird hierbei vorteilhafterweise nicht nur über den bereits zurückgelegten Weg, sondern als dem Trajektorienbild TB unterlegtes, abweichendes zweites Trajektorienbild dargestellt. Die Darstellung des Abweichungsbereiches AB erfolgt z.B. in roter Farbe, gegebenenfalls kann er auch blinkend dargestellt werden, um dem Fahrer die Abweichung zu verdeutlichen. Der Fahrer kann hierbei aus dem Abweichungsbereich AB in das Trajektorienbild TB durch entsprechende Korrektur seines Lenkeinschlages wechseln, woraufhin der Abweichungsbereich AB allmählich verkleinert wird und anschließend vollständig verschwindet, was für den Fahrer subjektiv dargestellt wird, als wenn das rote "falsche" Trajektorienbild unter dem richtigen Trajektorienbild verschwindet.

Entsprechend ist in Fig. 4 ein nicht ordnungsgemäßer Einparkvorgang dargestellt, bei dem der Fahrer bereits im zweiten Trajektorienbereich TB2 übersteuert, so dass der Abweichungsbereich AB als sich nach rechts an das Trajektorienbild TB anschließender Bereich in roter Farbe dargestellt wird, den der Fahrer durch entsprechende Korrektur des Lenkeinschlages wieder verringern und vollständig verschwinden lassen kann.

Fig. 5 zeigt eine Untersteuerung im dritten Trajektorienbereich TB3, wobei der Abweichungsbereich AB als Verlängerung der Trajektorie für den verbleiben Weg in roter Farbe dargestellt wird.

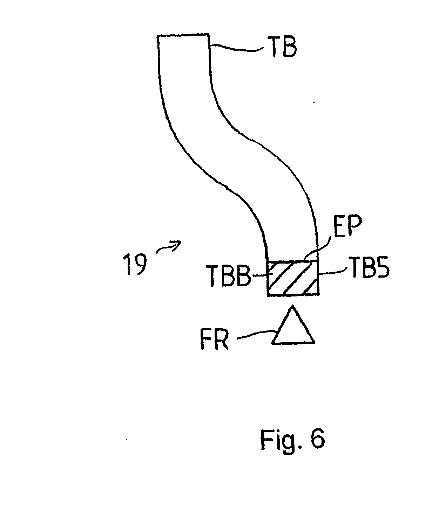

Fig. 6 zeigt den Fall, dass nach Fig. 2h ein Vorsetzen des Fahrzeuges 1 erforderlich ist. In diesem Fall wird gemäß Fig. 6 für die nach vorne zu fahrende Wegstrecke das Trajektorienbild TB um einen weiteren Trajektorienbereich TB5 ergänzt. Hierbei können gemäß Fig. 6 die alten Trajektorienbereiche TB1 bis TB4 weiterhin angezeigt werden; sie können hierbei z.B. matter oder heller angezeigt werden, um Verwechslungen zu vermeiden und dem Fahrer intuitiv verständlich zu machen, dass sie keine zurückzulegende Wegstrecke darstellen. Abweichend von Fig. 6 kann das in den Fig. 2 a bis 5 gezeigte erste Trajektorienbild auch zunächst ganz entfernt werden und nur der neue Trajektorienbereich TB5 dargestellt werden. Der neue Trajektorienbereich TB5 wird wiederum als zurückzulegender Bereichsabschnitt TBB in gelber Farbe dargestellt und nachfolgend während der Fahrt zugunsten des wachsenden, in grüner Farbe dargestellten zurückgelegten Bereichsabschnittes TBA verkleinert. Das Fahrtrichtungssymbol FR gibt zur Anzeige der Fahrtrichtung einen nach oben weisenden Pfeil wieder.

## Patentansprüche

1. Verfahren zum Anzeigen von Fahrerinformationen, mit mindestens folgenden Schritten:
Ermitteln von Positionsdaten einer Parklücke (15) aus Messsignalen (S) des Fahrzeuges (1),
Ermitteln einer Trajektorie (T) und von Lenkumkehrpunkten (LP1, LP2, LP3) der Trajektorie (T) zur Änderung des Lenkeinschlages,
Darstellung der Trajektorie (T) als Trajektorienbild (TB) auf einer Anzeigeeinrichtung (14) des Fahrzeuges (1), wobei
- die Darstellung des Trajektorienbildes (TB) anhand von Messsignalen (S) des Fahrzeuges (1) fortlaufend aktualisiert wird,
- zwischen den Lenkumkehrpunkten (LP1, LP2, LP3) Trajektorienbereiche (TB1, TB2, TB3, TB4) als Teile des Trajektorienbildes (TB) dargestellt werden,
- bereits zurückgelegte Trajektorienbereiche und noch zurückzulegende Trajektorienbereiche (TB1, TB2, TB3, TB4) unterschiedlich dargestellt werden, und
- innerhalb eines aktuell gefahrenen Trajektorienbereiches (TB1, TB2, TB3, TB4) ein bereits zurückgelegter Bereichsabschnitt (TBA) anders als ein noch zurückzulegender Bereichsabschnitt (TBB) dargestellt wird.

2. Verfahren nach Anspruch 1, **dadurch gekennzeichnet, dass** die Trajektorie (T) als Folge von Trajektorienbereichen (TB1, TB2, TB3, TB4) mit konstantem Lenkeinschlag ermittelt wird.

3. Verfahren nach Anspruch 1 oder 2, **dadurch gekennzeichnet, dass** das Trajektorienbild (TB) als ein zweidimensionales Band mit dem Verlauf der Trajektorie (T) dargestellt wird.

4. Verfahren nach einem der vorherigen Ansprüche, **dadurch gekennzeichnet, dass** vom Fahrzeug (1) bereits zurückgelegte Trajektorienbereiche (TB1, TB2, TB3, TB4) gegenüber noch zurückzulegenden Trajektorienbereichen (TB1, TB2, TB3, TB4) andersfarbig dargestellt werden, und in dem aktuell gefahrenen Trajektorienbereich (TB1, TB2, TB3, TB4) der bereits zurückgelegte Bereichsabschnitt (TBA) andersfarbig als der noch zurückzulegende Trajektorienbereich (TBB) dargestellt wird.

5. Verfahren nach einem der vorherigen Ansprüche, **dadurch gekennzeichnet, dass** die bereits zurückgelegten Trajektorienbereiche (TB1, TB2, TB3, TB4) und der im aktuellen Trajektorienbereich bereits zurückgelegte Bereichsabschnitt (TBA) gleich dargestellt werden.

6. Verfahren nach einem der vorherigen Ansprüche, **dadurch gekennzeichnet, dass** die Lenkumkehrpunkte (LP1, LP2, LP3) zwischen den Trajektorienbereichen durch Symbole (L, R) dargestellt werden.

7. Verfahren nach Anspruch 6, **dadurch gekennzeichnet, dass** bei Erreichen eines Lenkumkehrpunktes (LP 1, LP2, LP3) ein den vorzunehmenden Lenkeinschlag darstellendes Symbol (L, R) des Lenkumkehrpunktes (LP1, LP2, LP3) optisch hervorgehoben dargestellt wird, z.B. durch Blinken und/oder farbige Darstellung.

8. Verfahren nach Anspruch 7, **dadurch gekennzeichnet, dass** eine Darstellung des nächsten zurückzulegenden Trajektorienbereiches (TB1, TB2, TB3, TB4) unterbleibt, bis der Fahrer den erforderlichen Lenkeinschlag eingestellt hat.

9. Verfahren nach einem der vorherigen Ansprüche, **dadurch gekennzeichnet, dass** ein Fahrtrichtungssymbol (FR) zur Anzeige der Fahrtrichtung dargestellt wird, das während des Befahrens der Trajektorienbereiche (TB1, TB2, TB3, TB4) die Fahrtrichtung anzeigt und bei Erreichen eines Lenkumkehrpunktes (LP1, LP2, LP3) geändert wird zum Anzeigen eines Haltevorganges, bis ein ermittelter Lenkeinschlag eingestellt ist.

10. Verfahren nach einem der vorherigen Ansprüche, **dadurch gekennzeichnet, dass** die Symbole (L, R) der Lenkumkehrpunkte (LP1, LP2, LP3) an den Trajektorienbereich (TB) angrenzen.

11. Verfahren nach einem der vorherigen Ansprüche, **dadurch gekennzeichnet, dass** bei einer Abweichung der gefahrenen Fahrstrecke von der Trajektorie (T) auf der Anzeigeeinrichtung (14) ein die Fahrstrecke darstellender Abweichungsbereich (AB) neben dem Trajektorienbild (TB) dargestellt wird.

12. Verfahren nach Anspruch 11, **dadurch gekennzeichnet, dass** die gefahrene Fahrstrecke extrapoliert wird für noch zurückzulegende Trajektorienbereiche und die extrapolierte Fahrstrecke als Abweichungsbereich (AB) dargestellt wird.

13. Verfahren nach Anspruch 11 oder 12, **dadurch gekennzeichnet, dass** der Abweichungsbereich (AB) als dem Trajektorienbild (TB) unterlegter zweidimensionaler Flächenbereich dargestellt wird.

14. Verfahren nach Anspruch 12 oder 13, **dadurch gekennzeichnet, dass** der Abweichungsbereich (AB) gegenüber dem Trajektorienbild (TB) andersfarbig dargestellt wird.

15. Verfahren nach einem der vorherigen Ansprüche, **dadurch gekennzeichnet, dass** bei einer Änderung der Fahrtrichtung das Trajektorienbild (TB) ergänzt wird oder ein neues Trajektorienbild erstellt wird, und die geänderte Fahrtrichtung angezeigt wird.

16. Verfahren nach einem der vorherigen Ansprüche, **dadurch gekennzeichnet, dass** die ermittelte Trajektorie (T) fortlaufend in Abhängigkeit von der aktuellen Position des Fahrzeuges (1) angepasst wird.

## Claims

1. Method for indication of driver information, having at least the following steps:
position data relating to a parking space (15) is determined from measurement signals (S) from the vehicle (1),
a trajectory (T) and steering reversal points (LP1, LP2, LP3) for the trajectory (T) relating to the change in the steering angle are determined,
the trajectory (T) is displayed as a trajectory image (TB) on a display device (14) in the vehicle (1), with
- the display of the trajectory image (TB) being continuously updated on the basis of measurement signals (S) from the vehicle (1),
- trajectory regions (TB1, TB2, TB3, TB4) being displayed as parts of the trajectory image (TB) between the steering reversal points (LP1, LP2, LP3),
- trajectory regions which have already been covered and trajectory regions (TB1, TB2, TB3, TB4) which have not yet been covered are displayed differently, and
- a region section (TBA) which has already been covered is displayed differently from a region section
(TBB) which has not yet been covered within a trajectory region (TB1, TB2, TB3, TB4) which is currently being driven on.

2. Method according to Claim 1, **characterized in that** the trajectory (T) is determined as a sequence of trajectory regions (TB1, TB2, TB3, TB4) with a constant steering angle.

3. Method according to Claim 1 or 2, **characterized in that** the trajectory image (TB) is displayed as a two-dimensional strip with the profile of the trajectory (T).

4. Method according to one of the preceding claims, **characterized in that** trajectory regions (TB1, TB2, TB3, TB4) which have already been covered by the vehicle (1) are displayed in a different colour from trajectory regions (TB1, TB2, TB3, TB4) which have not yet been covered, and the region section (TBA) which has already been covered is displayed in a different colour from the trajectory region (TBB) which has not yet been covered in the trajectory region (TB1, TB2, TB3, TB4) which is currently being driven on.

5. Method according to one of the preceding claims, **characterized in that** the trajectory regions (TB1, TB2, TB3, TB4) which have already been covered and the region section (TBA) which has already been covered in the current trajectory region are displayed in the same way.

6. Method according to one of the preceding claims, **characterized in that** the steering reversal points (LP1, LP2, LP3) between the trajectory regions are displayed by symbols (L, R).

7. Method according to Claim 6, **characterized in that**, on reaching a steering reversal point (LP1, LP2, LP3), a symbol (L, R) which represents the steering angle to be applied for the steering reversal point (LP1, LP2, LP3) is displayed in a visually emphasized form, for example by flashing and/or by a coloured display.

8. Method according to Claim 7, **characterized in that** the next trajectory region (TB1, TB2, TB3, TB4) to be covered is not displayed until the driver has set the required steering angle.

9. Method according to one of the preceding claims, **characterized in that** a direction of travel symbol (FR) is displayed in order to indicate the direction of travel, indicating the direction of travel while driving on the trajectory regions (TB1, TB2, TB3, TB4) and, on reaching a steering reversal point (LP1, LP2, LP3), is changed in order to display a stopping process until a determined steering angle has been set.

10. Method according to one of the preceding claims, **characterized in that** the symbols (L, R) for the steering reversal points (LP1, LP2, LP3) are adjacent to the trajectory region (TB).

11. Method according to one of the preceding claims, **characterized in that**, if there is any discrepancy between the path that is being driven on and the trajectory (T), a discrepancy region (AB), which indicates the path travel, is displayed together with the trajectory image (TB) on the display device (14).

12. Method according to Claim 11, **characterized in that** the path travel is extrapolated for trajectory regions which have not yet been covered, and the extrapolated path is displayed as a discrepancy region (AB).

13. Method according to Claim 11 or 12, **characterized in that** the discrepancy region (AB) is displayed as a two-dimensional area region placed under the trajectory image (TB).

14. Method according to Claim 12 or 13, **characterized in that** the discrepancy region (AB) is displayed in a different colour from the trajectory image (TB).

15. Method according to one of the preceding claims, **characterized in that**, in the event of a change in the direction of travel, the trajectory image (TB) is supplemented or a new trajectory image is created, and the changed direction of travel is displayed.

16. Method according to one of the preceding claims, **characterized in that** the determined trajectory (T) is continuously adapted as a function of the current position of the vehicle (1).

## Revendications

1. Procédé d'affichage d'informations de conduite comprenant au moins les étapes suivantes :
- on détermine les données de position d'un emplacement de parking (15) à partir des signaux de mesure (S) du véhicule (1),
- on détermine une trajectoire (T) et des points de changement de direction (LP1, LP2, LP3) de la trajectoire (T) pour modifier le braquage,
- on représente la trajectoire (T) par une image de trajectoire (TB) sur une installation d'affichage (14) du véhicule (1),
- procédé selon lequel on actualise en permanence la représentation de l'image de trajectoire (TB) à l'aide des signaux de mesure (S) du véhicule (1),
- entre les points de changement de direction (LP1, LP2, LP3) on représente des plages de trajectoires (TB1, TB2, TB3, TB4) comme parties de l'image de trajectoire (TB),
- on représente différemment les plages de trajectoires déjà parcourues et les plages de trajectoires à parcourir (TB1, TB2, TB3, TB4) et
- dans une plage de trajectoire actuellement parcourue (TB1, TB2, TB3, TB4), on représente différemment un segment de plage (TBA) déjà parcouru un segment de plage (TBB) qui reste à parcourir.

2. Procédé selon la revendication 1,
**caractérisé en ce qu'**
on détermine la trajectoire (T) comme une succession de plages de trajectoires (TB1, TB2, TB3, TB4) à un braquage constant.

3. Procédé selon la revendication 1 ou 2,
**caractérisé en ce qu'**
on représente l'image de trajectoire (TB) comme un ruban à deux dimensions ayant le tracé de la trajectoire (T).

4. Procédé selon l'une des revendications précédentes,
**caractérisé en ce qu'**
on représente les plages de trajectoires (TB1, TB2, TB3, TB4) déjà parcourues par le véhicule (1) avec une couleur différente de celles des plages de trajectoires (TB1, TB2, TB3, TB4) restant à parcourir et dans la plage de trajectoires en cours de parcours (TB1, TB2, TB3, TB4), on représente le segment de plage déjà parcouru (TBA) avec une autre couleur que la plage de trajectoires qu'il reste à parcourir.

5. Procédé selon l'une des revendications précédentes,
**caractérisé en ce qu'**
on représente de la même manière les plages de trajectoires déjà parcourues (TB1, TB2, TB3, TB4) et le segment de plage (TBA) déjà parcouru dans la plage de trajectoires actuelle.

6. Procédé selon l'une des revendications précédentes,
**caractérisé en ce qu'**
on représente par des symboles (L, R), les points de changement de direction (LP1, LP2, LP3) entre les plages de trajectoires.

7. Procédé selon la revendication 6,
**caractérisé en ce que**
lorsqu'on atteint un point de changement de direction (LP1, LP2, LP3), on représente un symbole (L, R) indiquant le braquage à effectuer, en le surlignant optiquement pour le point de changement de direction (LP1, LP2, LP3), par exemple par clignotement et/ou par une représentation couleur.

8. Procédé selon la revendication 7,
**caractérisé en ce que**
la représentation de la plage de trajectoires (TB1, TB2, TB3, TB4) à parcourir ensuite est neutralisée jusqu'à ce que le conducteur ait réglé le braquage requis.

9. Procédé selon l'une des revendications précédentes,
**caractérisé en ce qu'**
on représente un symbole de direction de conduite (FR) pour afficher la direction de conduite **en ce que** pendant le parcours des plages de trajectoires (TB1, TB2, TB3, TB4), on indique la direction de conduite et lorsqu'on atteint un point de changement de direction (LP1, LP2, LP3), on modifie le symbole pour afficher une phase d'arrêt jusqu'à ce que le changement de direction déterminé soit réglé.

10. Procédé selon l'une des revendications précédentes,
**caractérisé en ce que**
les symboles (L, R) des points de changement de direction (LP1, LP2, LP3) sont adjacents aux plages de trajectoires (TB).

11. Procédé selon l'une des revendications précédentes,
**caractérisé en ce que**
si le trajet parcouru dévie de la trajectoire (T) on représente sur l'installation d'affichage (14), une plage de déviation (AB) représentant le trajet, à côté de l'image d'orientation de trajet (TB).

12. Procédé selon la revendication 11,
**caractérisé en ce qu'**
on extrapole le trajet parcouru pour des plages de trajets qui restent à parcourir et on représente le trajet extrapolé comme plage de déviation (AB).

13. Procédé selon la revendication 11 ou 12,
**caractérisé en ce qu'**
on représente la plage de déviation (AB) comme plage de surface à deux dimensions sous l'image de trajet (TB).

14. Procédé selon les revendications 12 ou 13,
**caractérisé en ce qu'**
on représente la plage de déviation (AB) avec une couleur différente de l'image de trajectoire (TB).

15. Procédé selon l'une des revendications précédentes,
**caractérisé en ce qu'**
en cas de changement de direction de conduite, on complète l'image de trajectoire (TB) ou on établit une nouvelle image de trajectoire et on affiche la direction de conduite modifiée.

16. Procédé selon l'une des revendications précédentes,
**caractérisé en ce qu'**
on adapte en permanence la trajectoire obtenue (T) en fonction de la position actuelle du véhicule (1).
